# EUROPEAN PATENT APPLICATION

(11) **EP 4 810 990 A1**
(43) Date of publication of application: **23.09.2026**
(21) Application number: 25205587.6
(22) Date of filing: 30.09.2025
(51) Int. Cl.: G01S 7/4861, G01S 7/486, G01S 7/489

(54) **RAPID SWITCHING SYSTEM OF LONG-DISTANCE AND SHORT-DISTANCE MEASUREMENT MODES FOR LASER RANGING TELESCOPE**

(30) Priority: 19.03.2025 CN 202510322494
(71) Applicant: Sndway Technology (Guangdong) Co., Ltd., Dongguan Guangdong (CN)
(72) Inventor: Ding, Chandong, No. 58, Tuanjie Road, Humen Town, Dongguan , Guangdong (CN); He, Gang, No. 58, Tuanjie Road, Humen Town, Dongguan , Guangdong (CN)
(74) Representative: Herrero & Asociados, S.L.

(57) **Abstract**

A rapid switching system of long-distance and short-distance measurement modes for a laser ranging telescope includes a received signal amplification module, a received signal detection module, a driving voltage switching module, and an MCU module. An output terminal of the received signal amplification module is electrically connected to an input terminal of the received signal detection module, an output terminal of the received signal detection module is electrically connected to the MCU module, an input terminal of the driving voltage switching module is electrically connected to the MCU module, and an output terminal of the driving voltage switching module is electrically connected to the received signal amplification module. The MCU drives the driving voltage switching module to output a low or high voltage by outputting a high or low control voltage, thereby switching the laser ranging telescope into the short-distance or long-distance measurement mode.

## Description

### TECHNICAL FIELD

The invention relates to the technical field of laser ranging, and more particularly to a rapid switching system of long-distance and short-distance measurement modes for a laser ranging telescope.

### BACKGROUND

A measurement distance of a laser ranging telescope can reach thousands of meters. During a measuring process, a receiving working voltage required varies due to different measurement distances. The greater the measurement distance, the higher the receiving working voltage. Whereas, the closer the measurement distance, the lower the receiving working voltage.

The laser ranging telescopes in the art, in order to improve measurement speeds, are directly configured with fixed receiving working voltages by most manufacturers, so that when switching between long-distance and short-distance measurement modes, the laser ranging telescopes generate fast responses to obtain the measurement distances. However, this method sets the fixed receiving working voltages higher to meet requirements of the long-distance measurement mode, leading to signal saturation and overload and an inability to detect a real signal during the short-distance measurement mode, thereby resulting in poor accuracy and a large error during the short-distance measurement mode.

Currently, in order to improve the accuracy of the laser ranging telescope, a receiving working voltage is designed to automatically adapt to the measuring distance, so that the receiving working voltage can be adjusted. However, when switching between the long-distance and short-distance measurement modes, a response speed is slow and a voltage stabilization time is long, which sacrifices the measurement speed and seriously affects measurement efficiency.

Therefore, a rapid switching system of long-distance and short-distance measurement modes for the laser ranging telescope is urgently needed.

### SUMMARY

### (1) Technical problems to be solved

In view of the aforementioned shortcomings and deficiencies in the art, the invention provides a rapid switching system of long-distance and short-distance measurement modes for a laser ranging telescope, which solves the technical problem of slow response speed and serious impact on measurement speed when switching between the long-distance and short-distance measurement modes in the art.

### (2) Technical solutions

To achieve the aforementioned objectives, the invention adopts the following main technical solutions.

In a first aspect, the rapid switching system of the long-distance and short-distance measurement modes for the laser ranging telescope provided by an embodiment of the invention includes a received signal amplification module which is available in related art and will not be described herein, a received signal detection module, a driving voltage switching module, and a microcontroller unit (MCU) module. An output terminal of the received signal amplification module is electrically connected to an input terminal of the received signal detection module. An output terminal of the received signal detection module is electrically connected to the MCU module. An input terminal of the driving voltage switching module is electrically connected to the MCU module. An output terminal of the driving voltage switching module is electrically connected to the received signal amplification module.

The MCU module is integrated with a digital-to-analog converter (DAC) control unit, and the DAC control unit is configured to output a DAC voltage control signal to the driving voltage switching module.

The MCU module is configured to output, in response to detecting a high-level signal sent by the received signal detection module, a high control voltage through the DAC control unit, causing the driving voltage switching module to output a low voltage for switching the laser ranging telescope to the short-distance measurement mode. The MCU module is configured to output, in response to detecting a low-level signal sent by the received signal detection module, a low control voltage through the DAC control unit, causing the driving voltage switching module to output a high voltage for switching the laser ranging telescope to the long-distance measurement mode.

The driving voltage switching module includes a high-voltage detection unit (i.e. voltage detection unit), a high-voltage output unit (i.e., voltage output unit), a boost unit, a boost chip unit, a voltage feedback unit, a DAC voltage regulation unit, and a filter unit sequentially and electrically connected.

In an embodiment, an output terminal of the MCU module is electrically connected to an input terminal of the filter unit. An output terminal of the filter unit is electrically connected to an input terminal of the DAC voltage regulation unit, and an output terminal of the DAC voltage regulation unit is electrically connected to an input terminal of the voltage feedback unit. An output terminal of the voltage feedback unit is electrically connected to an input terminal of the boost chip unit, and an output terminal of the boost chip unit is electrically connected to an input terminal of the boost unit. An output terminal of the boost unit is electrically connected to an input terminal of the high-voltage output unit, and an output terminal of the high-voltage output unit is connected to an input terminal of the high-voltage detection unit. Output terminals of the high-voltage detection unit are respectively connected to the MCU module and the received signal amplification module.

In an embodiment, the driving voltage switching module further includes an environmental temperature detection unit. The environmental temperature detection unit is electrically connected to the MCU module. The environmental temperature detection unit includes a thermistor NTC, a seventh resistor R7, an eighth resistor R8, a seventh capacitor C7, and a second power supply. The thermistor NTC is connected to the eighth resistor R8. The eighth resistor R8 is connected to the second power supply. A node between the thermistor NTC and the eighth resistor R8 serves as an output terminal electrically connected to the seventh resistor R7 and the seventh capacitor C7. The seventh capacitor C7 is connected to the MCU module.

In an embodiment, the environmental temperature detection unit is configured to detect an environmental temperature of the received signal amplification module in real time, convert the environmental temperature into an electrical signal, and transmit the electrical signal to the MCU module. The MCU module is configured to compare a preset zero compensation standard temperature with the environmental temperature, compensate voltage information output from the high-voltage output unit based on a preset compensation coefficient, and obtain voltage information output from the driving voltage switching module. The preset compensation coefficient is 15 millivolts per degree Celsius (mV/°C); for every 1 degree Celsius (°C) increase in temperature, a voltage is decreased by 15 millivolts (mV), whereas, for every 1°C decrease in the temperature, the voltage is increased by 15 mV.

In an embodiment, the received signal detection module includes an eighth capacitor C8, a ninth capacitor C9, a tenth capacitor C10, a ninth resistor R9, a tenth resistor R10, an eleventh resistor R11, a twelfth resistor R12, and a second comparator chip U2. The tenth resistor R10 is connected to the ninth resistor R9. The ninth resistor R9 is connected to a second power supply. A node between the tenth resistor R10 and the ninth resistor R9 serves as a first reference voltage node connected to the second comparator chip U2 and the ninth capacitor C9. The eleventh resistor R11 is connected to the twelfth resistor R12. The twelfth resistor R12 is connected to the second power supply. The eighth capacitor C8 is connected to the eleventh resistor R11 in parallel. A node among the eleventh resistor R11, the eighth capacitor C8, and the twelfth resistor R12 serves as a second reference voltage node connected to the second comparator chip U2. The tenth capacitor C10 is connected to the second power supply and the second comparator chip U2.

In an embodiment, the boost unit includes a first power supply, a high-voltage metal-oxide-semiconductor (MOS) transistor (i.e., MOS transistor) Q1, a first inductor L1 and a fourth capacitor C4. An input terminal of the high-voltage MOS transistor Q1 is connected to the output terminal of the boost chip unit, and an output terminal of the high-voltage MOS transistor Q1 is connected to the high-voltage output unit. The first inductor L1 is connected to the fourth capacitor C4. The first inductor L1, the first power supply, and the fourth capacitor C4 are connected onto a circuit composed of the boost chip unit and the high-voltage MOS transistor Q1.

In an embodiment, the DAC voltage regulation unit includes a second resistor R2. The voltage feedback unit includes a third resistor R3, a fourth resistor R4, and a second capacitor C2. The third resistor R3 is connected to the fourth resistor R4 in series. The second capacitor C2 is connected to the third resistor R3 in parallel.

In an embodiment, the high-voltage output unit is a rectifier filter circuit including a diode D1 and a fifth capacitor C5. The high-voltage detection unit includes a fifth resistor R5, a sixth resistor R6, and a sixth capacitor C6. The fifth resistor R5, the sixth resistor R6 and the sixth capacitor C6 are connected in a series-parallel configuration.

In an embodiment, when the high-voltage MOS transistor Q1 is turned on, the first inductor L1 short-circuits the first power supply, such that the first power supply charges the first inductor L1, an inductor current increases at a constant slope, and the first inductor L1 begins to store energy. When the high-voltage MOS transistor Q1 is turned off, the inductor current continues flowing in an original current direction, with the first inductor L1 resisting the inductor current from decreasing, thereby generating a reverse electromotive force.

In a second aspect, a laser ranging telescope provided by another embodiment of the invention includes an optical component configured to collect target light rays and magnify an image, a laser generating component configured to generate and emit laser pulses, the rapid switching system of the long-distance and short-distance measurement modes for the laser ranging telescope configured to rapidly regulate a working voltage, a data processing component configured to process a received electric signal and calculate a measurement result, and a user interface component configured to display the measurement result and allow a user to set and control. The rapid switching system of the long-distance and short-distance measurement modes for the laser ranging telescope is the rapid switching systems of the long-distance and short-distance measurement modes for the laser ranging telescope described in the first aspect.

### (3) Beneficial effects

The invention has the following beneficial effects. The rapid switching system of the long-distance and short-distance measurement modes for the laser ranging telescope provided by the invention includes the received signal amplification module, the received signal detection module, the driving voltage switching module, and the MCU module. The DAC control unit used to output a control signal to the driving voltage switching module is integrated onto the MCU module. By combining the driving voltage switching module designed by the invention, the MCU module can output, in response to detecting the high-level signal sent by the received signal detection module, the high control voltage through the DAC control unit, causing the driving voltage switching module to output the low voltage for switching the laser ranging telescope to the short-distance measurement mode, whereas causing the driving voltage switching module to output the high voltage for switching the laser ranging telescope to the long-distance measurement mode. In this way a response speed of the laser ranging telescope in the long-distance and short-distance measurement modes after switching voltage during measuring distance is improved. In addition, during a measurement process, the rapid switching system of the long-distance and short-distance measurement modes provided by the invention can also collect signals output from the environmental temperature detection unit, the received signal detection module, and the high-voltage detection unit through the MCU module in combination with the DAC control unit. After the signals are processed by the MCU module and the DAC control unit, the DAC control unit outputs the voltage control signal to regulate the voltage output by the driving voltage switching module in real time, so that received signals are in a state that is easy to process, thereby improving measurement accuracy of the laser ranging telescope.

### BREIF DESCRIPTION OF DRAWINGS

FIG. 1 illustrates a schematic diagram of a rapid switching system of long-distance and short-distance measurement modes for a laser ranging telescope according to an embodiment of the invention.
FIG. 2 illustrates a response time diagram of a laser ranging telescope in the art.
FIG. 3 illustrates a response time diagram of a laser ranging telescope according to an embodiment 3 of the invention.

### Description of reference numerals:

1: boost unit; 2: high-voltage output unit; 3: high-voltage detection unit; 4: environmental temperature detection unit; 5: voltage feedback unit; 6: filter unit; 7: DAC voltage regulation unit; 8: boost chip unit; 9: received signal detection module.

### DETAILED DESCRIPTION OF EMBODIMENTS

To better illustrate the invention and facilitate understanding, the invention will be described in detail as follows through specific embodiments with reference to attached drawings.

A rapid switching system of long-distance and short-distance measurement modes for a laser ranging telescope provided by the invention includes a received signal amplification module, a received signal detection module, a driving voltage switching module, and an MCU module. A DAC control unit used to output a control signal to the driving voltage switching module is integrated onto the MCU module. By combining the driving voltage switching module designed by the invention, the MCU module can output, in response to a high-level signal sent by the received signal detection unit, a high control voltage through the DAC control unit, causing the driving voltage switching module to output a low voltage for switching the laser ranging telescope to the short-distance measurement mode, whereas causing the driving voltage switching module to output a high voltage for switching the laser ranging telescope into the long-distance measurement mode. In this way, a response speed of the laser ranging telescope in the long-distance and short-distance measurement modes after switching voltage during measuring distance is improved. In addition, during a measurement process, the rapid switching system of the long-distance and short-distance measurement modes provided by the invention can also collect signals output from an environmental temperature detection unit, the received signal detection module, and a high-voltage detection unit through the MCU module in combination with the DAC control unit. After the signals are processed by the MCU module and the DAC control unit, the DAC control unit outputs the voltage control signal to regulate a voltage output by the driving voltage switching module in real time, so that received signals are in a state that is easy to process, thereby improving measurement accuracy of the laser ranging telescope.

To better understand the aforementioned technical solutions, exemplary embodiments of the invention will be described in more detail with reference to the attached drawings. Although the exemplary embodiments of the invention are illustrated in the attached drawings, it should be understood that the invention can be implemented in various forms and should not be limited by embodiments described herein. Conversely, the embodiments described herein are provided to enable a clearer and more thorough understanding of the invention and to fully convey a scope of protection of the invention to those skilled in the art.

### Embodiment 1

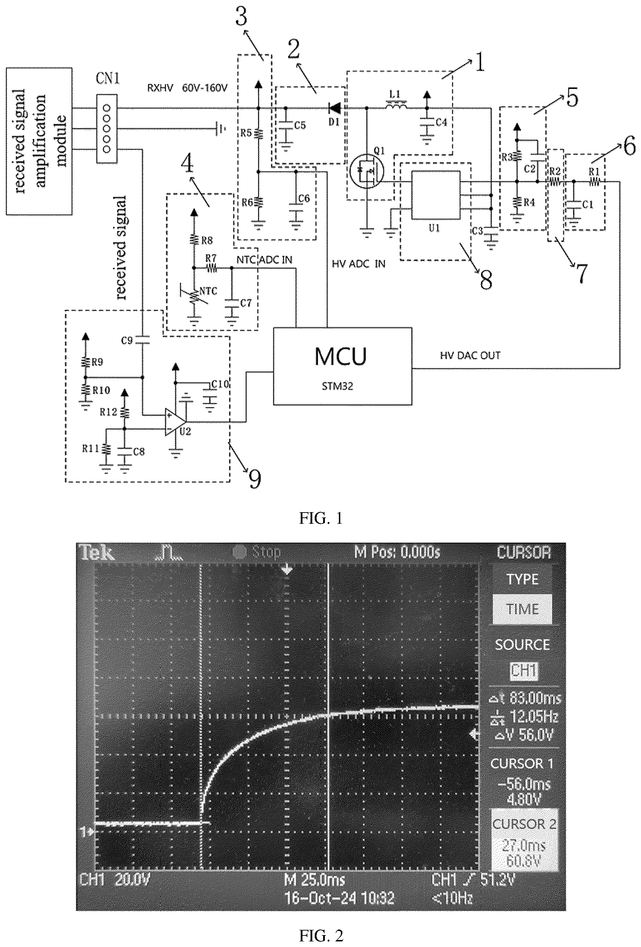

As illustrated in FIG. 1, a rapid switching system of long-distance and short-distance measurement modes for a laser ranging telescope provided by the embodiment includes a received signal amplification module, a received signal detection module (also referred to as a received signal detection circuit) 9, a driving voltage switching module (also referred to as a driving voltage switching circuit), and an MCU module (also referred to as an MCU-based circuit).

An output terminal of the received signal amplification module is electrically connected to an input terminal of the received signal detection module 9. An output terminal of the received signal detection module 9 is electrically connected to the MCU module. An input terminal of the driving voltage switching module is electrically connected to the MCU module. An output terminal of the driving voltage switching module is electrically connected to the received signal amplification module.

The MCU module is integrated with a DAC control unit (also referred to as a DAC controller), and the DAC control unit is configured to output a DAC voltage control signal to the driving voltage switching module.

The MCU module outputs, in response to a high-level signal sent by the received signal detection module 9, a high control voltage through the DAC control unit, causing the driving voltage switching module to output a low voltage for switching the laser ranging telescope to the short-distance measurement mode.

The MCU module outputs, in response to a low-level signal sent by the received signal detection module 9, a low control voltage through the DAC control unit, causing the driving voltage switching module to output a high voltage for switching the laser ranging telescope to the long-distance measurement mode.

In a specific implementation process, the received signal amplification module receives a reflected signal, filters the reflected signal, and sends the reflected signal after filtering to the received signal detection module 9. The received signal detection module 9 determines whether a voltage of a currently received signal superimposed with a preset reference voltage is greater than a preset comparison voltage.

When the voltage of the currently received signal superimposed with the preset reference voltage is greater than the preset comparison voltage, the received signal detection module 9 outputs the high-level signal to the MCU module. At this time, after detecting that the received signal detection module 9 sends the high-level signal, the MCU module outputs the high control voltage through the DAC control unit, causing the driving voltage switching module to output the low voltage for switching the laser ranging telescope to the short-distance measurement mode.

When the voltage of the currently received signal superimposed with the preset reference voltage is smaller than the preset comparison voltage, the received signal detection module 9 outputs the low-level signal to the MCU module. At this time, after detecting that the received signal detection module 9 sends the low-level signal, the MCU module outputs the low control voltage through the DAC control unit, causing the driving voltage switching module to output the high voltage for switching the laser ranging telescope to the long-distance measurement mode.

In the embodiment, the low voltage and the high voltage are in a range of 60 volts (V) to 120 V. The low control voltage is in a range of 0.8 V to 1.2 V, and the high control voltage is in a range of 1.2 V to 2 V. The high-level signal and the low-level signal vary according to an actual measurement range, a laser power, and a measurement distance. When receiving a highest level 2 V of the high control voltage, the driving voltage switching module outputs a lowest level 60 V of the low voltage. When receiving a lowest level 0.8 V of the low control voltage, the driving voltage switching module outputs a highest level 120 V of the high voltage. Subsequently, the low voltage and the high voltage output by the driving voltage switching module can be fine-tuned based on waveform characteristics thereof, thereby improving both a measurement range and measurement accuracy.

Specifically, the low voltage and the high voltage output by the driving voltage switching module can be fine-tuned based on waveform characteristics thereof through the following steps.

When outputting the low control voltage, the DAC control unit outputs the lowest level of the low control voltage, and an output terminal of a high-voltage output unit 2 outputs a maximum driving voltage, at this time, the laser ranging telescope is switched to the long-distance measurement mode. The MCU module analyzes a detected signal waveform returned by a measurement target under the maximum driving voltage. When a pulse width of the detected signal waveform is zero, the maximum driving voltage is directly used for measurement. When the pulse width of the detected signal waveform is greater than zero, the MCU module increases an output voltage of the DAC control unit, thereby decreasing an output voltage at the output terminal of the high-voltage output unit 2, until the pulse width of the detected waveform becomes zero, the MCU module stops regulating the output voltage of the DAC control unit. When the detected signal waveform is too weak and falls beyond the measurement range, the MCU module outputs an over-range prompt.

When outputting the high control voltage, the DAC control unit outputs the highest level of the high control voltage, and the output terminal of the high-voltage output unit 2 outputs a minimum driving voltage, at this time, the laser ranging telescope is switched to the short-distance measurement mode. The MCU module analyzes the detected signal waveform returned by the measurement target under the minimum driving voltage. When the detected signal waveform is too weak and smaller than a preset threshold (the preset threshold varies according to different measurement range), the MCU module decreases the output voltage of the DAC control unit, thereby increasing the output voltage at the output terminal of the high-voltage output unit 2 until the detected signal waveform is equal to or greater than the preset threshold, the MCU module stops regulating the output voltage of the DAC control unit and outputs a measurement result. When the detected signal waveform under the highest level of the high control voltage is a saturated signal waveform, the measurement result after being compensated by a distance compensation algorithm is output by the MCU module.

When environmental temperature voltage compensation and high-voltage output feedback compensation are required, the output voltage output by the DAC control unit is superimposed with an environmental temperature compensation voltage and a high-voltage output compensation voltage.

Specifically, the MCU module collects level signal data sent by the received signal detection module 9 through the following steps. A circular data buffer with a length of 20 is established. Every time a new sample value of level signal data sent by the received signal detection module 9 is acquired, a weight of 3:7 is assigned between the new sample value and 19 historical data values, among which the 19 historical data values are evenly distributed with the weight of 70%, thereby effectively suppressing random interference while retaining characteristics of rapid signal change. A circular queue structure is used to dynamically maintain a sampling sequence. During each computation, the circular data buffer is traversed to perform weighted summation, and a smoothed voltage value is then output to the DAC control unit. This processing mode of the MCU module improves a step response speed by 25% and enhances a suppression capability against impulse noise by 40%.

The DAC control unit uses a dynamic control method, specifically including constructing a DAC output control model and setting 2048 as a middle-distance reference value with a corresponding output voltage of 1.2V. When the measurement distance is smaller than a preset maximum short-distance threshold, a maximum value of 4095 is output to trigger the DAC control unit to output the high control voltage of 2 V. When the measurement distance exceeds a preset minimum long-distance threshold, a minimum value of 0 is output to trigger the DAC control unit to output the low control voltage of 0.8 V.

A formula for controlling the output voltage of the DAC control unit according to the level signal data sent by the received signal detection module 9 is specifically as follows: $\begin{matrix}Output voltage of DAC = middle - distance reference value ∗ \\ \frac{1 + \left[0.5+0.1 sin\left(2π\frac{{V}_{max} - {V}_{0}}{{V}_{max} - {V}_{min}}\right)\right] ∗ ln \frac{{V}_{0}}{{V}_{in}}}{0.2 ∗ \frac{{V}_{max} - {V}_{0}}{{V}_{max} - {V}_{min}} ∗ 460 + 1}\end{matrix}$ where *Vₘₐₓ* represents a maximum control voltage of 2 V, *Vₘᵢₙ* represents a minimum control voltage of 0.8 V, V₀ represents the middle-distance reference level of 1.2 V, and *Vᵢₙ* represents the level signal data sent by the received signal detection module 9.

The driving voltage switching module includes a boost unit (also referred to as a boost circuit) 1, the high-voltage output unit (also referred to as a voltage output circuit) 2, a high-voltage detection unit (also referred to as a voltage detection circuit) 3, a voltage feedback unit (also referred to as a voltage feedback circuit) 5, a filter unit (also referred to as a filter circuit) 6, a DAC voltage regulation unit (also referred to as a DAC voltage regulation circuit) 7, and a boost chip unit (e.g., a boost chip) 8.

An output terminal of the MCU module is electrically connected to an input terminal of the filter unit 6. An output terminal of the filter unit 6 is electrically connected to an input terminal of the DAC voltage regulation unit 7, and an output terminal of the DAC voltage regulation unit 7 is electrically connected to an input terminal of the voltage feedback unit 5. An output terminal of the voltage feedback unit 5 is electrically connected to an input terminal of the boost chip unit 8, and an output terminal of the boost chip unit 8 is electrically connected to an input terminal of the boost unit 1. An output terminal of the boost unit 1 is electrically connected to an input terminal of the high-voltage output unit 2, and the output terminal of the high-voltage output unit 2 is connected to an input terminal of the high-voltage detection unit 3. Output terminals of the high-voltage detection unit 3 are respectively connected to the MCU module and the received signal amplification module.

In the embodiment, the DAC voltage regulation unit 7 is a second resistor R2, and a DAC voltage is connected to a feedback (FB) pin of the boost chip unit 8 through the second resistor R2. Based on a designed measurement distance of the laser ranging telescope and a received return laser distance, a range of a receiver high-voltage (RX-HV) voltage regulated by the DAC voltage regulation unit 7 is determined.

The driving voltage switching module further includes an environmental temperature detection unit 4. The environmental temperature detection unit 4 is electrically connected to the MCU module. The environmental temperature detection unit 4 includes a thermistor NTC, a seventh resistor R7, an eighth resistor R8, a seventh capacitor C7, and a second power supply. The thermistor NTC is connected to the eighth resistor R8. The eighth resistor R8 is connected to the second power supply. A node between the thermistor NTC and the eighth resistor R8 serves as an output terminal electrically connected to the seventh resistor R7 and the seventh capacitor C7. The seventh capacitor C7 is connected to the MCU module.

The environmental temperature detection unit 4 is configured to detect an environmental temperature of the received signal amplification module in real time, convert the environmental temperature into an electrical signal, and transmit the electrical signal to the MCU module. The MCU module is configured to compare a preset zero compensation standard temperature with the environmental temperature, compensate voltage information output from the high-voltage output unit 2 based on a preset compensation coefficient, and obtain voltage information output from the driving voltage switching module. The preset compensation coefficient is 15 mV/°C; for every 1°C increase in temperature, a voltage is decreased by 15 mV, whereas, for every 1°C decrease in the temperature, the voltage is increased by 15 mV.

Specifically, the environmental temperature detection unit 4 detects the environmental temperature of the received signal amplification, converts the environmental temperature into the electrical signal, and transmits the electrical signal to the MCU module. The MCU module analyzes analog-to-digital converter (ADC) signals sent by the high-voltage output unit 2 and the environmental temperature detection unit 4 and combines characteristics of the signal waveform returned by the measurement target and received and output by the received signal amplification to fine-tune the output voltage of the driving voltage switching module to meet needs of different measurement distances.

In the embodiment, the received signal detection module 9 includes an eighth capacitor C8, a ninth capacitor C9, a tenth capacitor C10, a ninth resistor R9, a tenth resistor R10, an eleventh resistor R11, a twelfth resistor R12, and a second comparator chip U2. The tenth resistor R10 is connected to the ninth resistor R9. The ninth resistor R9 is connected to a second power supply. A node between the tenth resistor R10 and the ninth resistor R9 serves as a first reference voltage node connected to the second comparator chip U2 and the ninth capacitor C9. The eleventh resistor R11 is connected to the twelfth resistor R12. The twelfth resistor R12 is connected to the second power supply. The eighth capacitor C8 is connected to the eleventh resistor R11 in parallel. A node among the eleventh resistor R11, the eighth capacitor C8, and the twelfth resistor R12 serves as a second reference voltage node connected to the second comparator chip U2. The tenth capacitor C10 is connected to the second power supply and the second comparator chip U2.

In the embodiment, the boost unit 1 includes a first power supply, a high-voltage MOS transistor Q1, a first inductor L1 and a fourth capacitor C4. An input terminal of the high-voltage MOS transistor Q1 is connected to the output terminal of the boost chip unit 8, and an output terminal of the high-voltage MOS transistor Q1 is connected to the high-voltage output unit 2. The first inductor L1 is connected to the fourth capacitor C4. The first inductor L1, the first power supply, and the fourth capacitor C4 are connected onto a circuit composed of the boost chip unit 8 and the high-voltage MOS transistor Q1.

In the specific implementation process, the DAC voltage regulation unit 7 includes the second resistor R2. The voltage feedback unit 5 includes a third resistor R3, a fourth resistor R4, and a second capacitor C2. The third resistor R3 is connected to the fourth resistor R4 in series. The second capacitor C2 is connected to the third resistor R3 in parallel.

The filter unit 6 is a resistance-capacitance (RC) filter circuit including a first resistor R1 and a first capacitor C1 connected in series, and configured to filter high-frequency noise.

In the embodiment, the high-voltage output unit 2 is a rectifier filter circuit including a diode D1 and a fifth capacitor C5. The high-voltage detection unit includes a fifth resistor R5, a sixth resistor R6, and a sixth capacitor C6. The fifth resistor R5, the sixth resistor R6 and the sixth capacitor C6 are connected in a series-parallel configuration.

In the embodiment, the boost unit 1 includes the high-voltage MOS transistor Q1, the first inductor L1 and the fourth capacitor C4. When the high-voltage MOS transistor Q1 is turned on, it is equivalent to short-circuiting the first power supply with the first inductor L1, such that an inductor current increases at a constant slope; at this time, the first inductor L1 is storing energy. When the high-voltage MOS transistor Q1 is turned off, since the inductor current does not jump, the inductor current continues to flow in an original current direction, with the first inductor L1 resisting the inductor current from decreasing, thereby generating a reverse electromotive force VL to achieve voltage boosting.

The reverse electromotive force VL is rectified by the diode D1. At this time, the voltage RX-HV on the fifth capacitor C5 is equal to the reverse electromotive force VL on the first inductor L1 plus a voltage of the first power supply of 3.3 V.

The rapid switching system of the long-distance and short-distance measurement modes for the laser ranging telescope provided by the embodiment significantly improves a measurement speed and a response speed of the laser ranging telescope and effectively avoids poor measurement accuracy and large error in the short-distance measurement mode, thereby improving the measurement accuracy.

### Embodiment 2

A rapid switching system of long-distance and short-distance measurement modes for a laser ranging telescope provided by the embodiment is the same as that provided by embodiment 1 and will not be described herein. The embodiment only illustrates an information flow direction.

In a specific implementation process, the rapid switching system of the long-distance and short-distance measurement modes for the laser ranging telescope provided by the invention has the following circuit flow direction.

A range of an RX-HV voltage is determined based on a designed measurement distance of the laser ranging telescope and an intensity of a returned laser.

A first power supply and a second power supply are connected to a circuit, and both the first power supply and the second power supply are 3.3V power supplies. After the power supplies are connected to the circuit, a DAC control unit outputs a DAC signal used to control the RX-HV voltage.

The DAC signal is filtered by a filter unit 6 to remove high-frequency noise therein, thereby making the DAC voltage signal more stable.

The DAC signal filtered by the filter unit 6 is input to an FB pin of a boost chip unit 8 through a DAC voltage regulation unit 7.

The boost chip unit 8 sends a boost control signal through an external (EXT) pin to control on and off of a high-voltage MOS transistor Q1 in a boost unit 1. When the high-voltage MOS transistor Q1 is turned on, a loop is formed between the first power supply and the high-voltage MOS transistor Q1, and the first power supply charges a first inductor L1. At this time, an inductor current increases at a constant slope, and the first inductor L1 starts to store energy. At the same time, a fourth capacitor C4 filters the first power supply. When the high-voltage MOS transistor Q1 is turned off, a current flows to a diode D1. At this time, since a current of the first inductor L1 will not jump after energy storage, the inductor current continues to flow in an original current direction, such that the first inductor L1 generates a reverse electromotive force VL to resist the inductor current from decreasing. The reverse electromotive force VL, after being superimposed with the first power supply, is rectified by the diode D1 and then loaded onto a fifth capacitor C5. At this time, a voltage loaded onto the fifth capacitor C5 is the reverse electromotive force VL plus 3.3V, namely the RX-HV voltage.

After the RX-HV voltage is generated, a high-voltage detection unit 3 acquires an output value of the RX-HV voltage in real time and feeds back the output value to an MCU module. The MCU module regulates an output signal of the DAC control unit based on feedback information.

The RX-HV voltage after input to a voltage feedback unit 5 and divided by a third resistor R3 and a fourth resistor R4 is fed back to the FB pin of a boost chip unit 8. At the same time, a second capacitor C2 is connected to the third resistor R3 in parallel to feed back high-frequency noise of the RX-HV voltage to the FB pin of the boost chip unit 8, thereby realizing suppression of the high-frequency noise. The voltage feedback unit 5 can prevent the MCU module from causing instability during a reset phase, which may result in an excessively high RX-HV voltage that may damage components.

An environmental temperature detection unit 4 collects an environmental temperature, converts the environmental temperature into a signal, and transmits the signal to the MCU module. The MCU module performs real-time temperature compensation based on the signal of the environmental temperature.

Compared with laser ranging telescopes in the art, the invention has a short stabilization time during switching voltage, thereby significantly improving a measurement speed and a response speed of the laser ranging telescope. In addition, during a measurement process, the invention directly adjusts the RX-HV voltage in real time, effectively avoiding a problem of signal saturation caused by application of fixed voltage, which leads to an inability to detect a true signal and results in poor accuracy and large errors in the short-distance measurement mode. Furthermore, the invention solves a problem of long stabilization time when regulating the RX-HV voltage and can regulate the RX-HV voltage in real-time during the measurement process to make a received signal in a linear region, to thereby improve measurement accuracy.

### Embodiment 3

A laser ranging telescope is provided by the embodiment, including: an optical component, a laser generating component, a rapid switching system of long-distance and short-distance measurement modes for the laser ranging telescope, a data processing component, and a user interface component. The optical component is configured to collect target light rays and magnify an image. The laser generating component is configured to generate and emit laser pulses. The rapid switching system of the long-distance and short-distance measurement modes for the laser ranging telescope is configured to rapidly regulate a working voltage. The data processing component is configured to process a received electric signal and calculate a measurement result. The user interface component is configured to display the measurement result and allow a user to set and control. The rapid switching system of the long-distance and short-distance measurement modes for the laser ranging telescope is the rapid switching system of the long-distance and short-distance measurement modes for the laser ranging telescope described in any one of embodiment 1 and embodiment 2.

In a specific implementation process, the optical component includes an objective lens and an eyepiece, which are used to collect the target light rays and magnify the image. The objective lens is configured to collect distant target light rays, and the eyepiece is configured to help the user to observe the image after being magnified.

The laser generating component includes a laser diode and a related driving circuit. The laser diode generates and emits the laser pulses, and the laser pulses are directed to a measurement target.

The rapid switching system of the long-distance and short-distance measurement modes for the laser ranging telescope is the rapid switching system of the long-distance and short-distance measurement modes for the laser ranging telescope described in any one of embodiment 1 and embodiment 2.

The data processing component includes a microprocessor or field programmable gate array (FPGA) and is configured to process the received electric signal and calculate the measurement result.

The user interface component includes a liquid crystal display (LCD) screen and buttons or a touch screen. The LCD screen is used to display the measurement result, and the buttons or the touch screen is used to allow the user to set and control.

The laser ranging telescope in the embodiment is a portable optoelectronic instrument and features low laser emission power, which is eye-safe for humans. The laser ranging telescope does not require pairing with the measurement target and can measure distances for any object. With a compact size and lightweight design, the laser ranging telescope is convenient to carry.

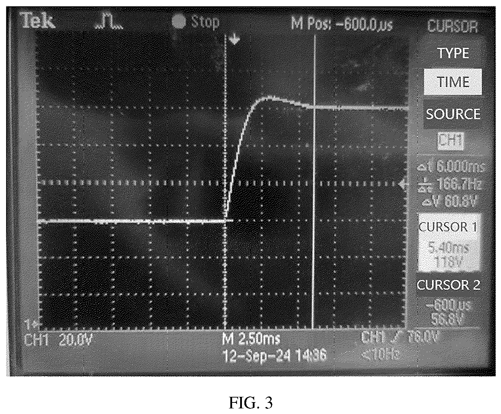

Additionally, the rapid switching system of the long-distance and short-distance measurement modes for the laser ranging telescope uses the rapid switching system of the long-distance and short-distance measurement modes for the laser ranging telescope described in any one of embodiment 1 and embodiment 2, thereby improving a response speed of the laser ranging telescope. As illustrated in FIG. 2 and FIG. 3, a response speed of a laser ranging telescope without the rapid switching system of the long-distance and short-distance measurement modes for the laser ranging telescope provided by the embodiments is 80 milliseconds (ms), while the response speed of the laser ranging telescope provided in the embodiment with the rapid switching system of the long-distance and short-distance measurement modes for the laser ranging telescope is improved, reaching 6 ms.

The laser ranging telescope provided in the embodiment is widely used in installation of power equipment. Entire series of the laser ranging telescope are equipped with scanning measurement functions, enabling easy identification of distant small targets such as wires and power towers. Furthermore, the laser ranging telescope provided in the embodiment can be used in various outdoor measurements such as highways, municipal engineering, forestry survey and design, construction, network planning and survey equipment, and communication maintenance, and personal outdoor sports enthusiasts such as golf.

In description of the invention, it should be understood that, terms "first" and "second" are merely used for descriptive purposes and cannot be understood as indicating or implying relative importance or implicitly indicating a number of indicated technical features. Therefore, features specified with "first" and "second" may explicitly or implicitly include one or more of these features. In the description of the invention, a meaning of "multiple" is two or more, unless otherwise specifically indicated.

In the invention, unless otherwise specified and limited, terms such as "install", "connect", "link" and "fix" should be understood in broad sense; for example, it can be a fixed connection, a detachable connection, or an integrated connection; it can be a mechanical connection or an electrical connection; it can be a direct connection or an indirect connection through an intermediate medium; it can be a communication inside two elements or an interaction between two elements. For those skilled in the art, specific meanings of the above terms in the invention can be understood according to specific situations.

In the invention, unless otherwise specified and limited, a first feature being "above" or "below" a second feature can be direct contact between the first and second features or indirect contact between the first and second features through an intermediate medium. Moreover, the first feature being "on", "above", and "over" the second feature can mean the first feature is directly above or diagonally above the second feature or simply indicate that the first feature is horizontally higher than the second feature. The first feature being "under", "below", and "beneath" the second feature can mean the first feature is directly below or diagonally below the second feature, or simply indicate that the first feature is horizontally lower than the second feature.

In the description of the invention, description of terms "an embodiment", "some embodiments", "embodiments", "example", "specific embodiments" and "some examples" indicates that specific features, structures, materials, or characteristics described in combination with these embodiments or examples are included in at least one embodiment or example of the invention. In the specification, illustrative expressions of the above terms do not necessarily refer to the same embodiments or examples. Moreover, specific features, structures, materials, or characteristics described can be combined in any one or more embodiments or examples in an appropriate manner. In addition, those skilled in the art can combine different embodiments or examples described in the specification and features of different embodiments or examples without conflicting with each other.

Although the embodiments of the invention have been illustrated and described above, it should be understood that the above embodiments are exemplary and cannot be understood as limitations of the invention, and those skilled in the art can make changes, modifications, substitutions, and variations to the above embodiments within the scope of protection of the invention.

## Claims

1. A rapid switching system of long-distance and short-distance measurement modes for a laser ranging telescope, comprising: a received signal amplification module, a received signal detection module (9), a driving voltage switching module, and a microcontroller unit (MCU) module;
wherein an output terminal of the received signal amplification module is electrically connected to an input terminal of the received signal detection module (9), an output terminal of the received signal detection module (9) is electrically connected to the MCU module, an input terminal of the driving voltage switching module is electrically connected to the MCU module, and an output terminal of the driving voltage switching module is electrically connected to the received signal amplification module;
wherein the MCU module is integrated with a digital-to-analog converter (DAC) control unit, and the DAC control unit is configured to output a DAC voltage control signal to the driving voltage switching module;
wherein the MCU module is configured to output, in response to detecting a high-level signal sent by the received signal detection module (9), a high control voltage through the DAC control unit, causing the driving voltage switching module to output a low voltage for switching the laser ranging telescope to the short-distance measurement mode;
wherein the MCU module is configured to output, in response to detecting a low-level signal sent by the received signal detection module (9), a low control voltage through the DAC control unit, causing the driving voltage switching module to output a high voltage for switching the laser ranging telescope to the long-distance measurement mode; and
wherein the driving voltage switching module comprises a voltage detection unit (3), a voltage output unit (2), a boost unit (1), a boost chip unit (8), a voltage feedback unit (5), a DAC voltage regulation unit (7), and a filter unit (6) sequentially and electrically connected.

2. The rapid switching system of the long-distance and short-distance measurement modes for the laser ranging telescope as claimed in claim 1, wherein an output terminal of the MCU module is electrically connected to an input terminal of the filter unit (6); an output terminal of the filter unit (6) is electrically connected to an input terminal of the DAC voltage regulation unit (7), and an output terminal of the DAC voltage regulation unit (7) is electrically connected to an input terminal of the voltage feedback unit (5); an output terminal of the voltage feedback unit (5) is electrically connected to an input terminal of the boost chip unit (8), and an output terminal of the boost chip unit (8) is electrically connected to an input terminal of the boost unit (1); an output terminal of the boost unit (1) is electrically connected to an input terminal of the voltage output unit (2), and an output terminal of the voltage output unit (2) is connected to an input terminal of the voltage detection unit (3); and output terminals of the voltage detection unit (3) are respectively connected to the MCU module and the received signal amplification module.

3. The rapid switching system of the long-distance and short-distance measurement modes for the laser ranging telescope as claimed in claim 2, wherein the driving voltage switching module further comprises an environmental temperature detection unit (4), and the environmental temperature detection unit (4) is electrically connected to the MCU module;
wherein the environmental temperature detection unit (4) comprises a thermistor NTC, a seventh resistor R7, an eighth resistor R8, a seventh capacitor C7, and a second power supply; and
wherein the thermistor NTC is connected to the eighth resistor R8, the eighth resistor R8 is connected to the second power supply, a node between the thermistor NTC and the eighth resistor R8 serves as an output terminal electrically connected to the seventh resistor R7 and the seventh capacitor C7, and the seventh capacitor C7 is connected to the MCU module.

4. The rapid switching system of the long-distance and short-distance measurement modes for the laser ranging telescope as claimed in claim 3, wherein the environmental temperature detection unit (4) is configured to detect an environmental temperature of the received signal amplification module in real time, convert the environmental temperature into an electrical signal, and transmit the electrical signal to the MCU module;
wherein the MCU module is configured to compare a preset zero compensation standard temperature with the environmental temperature, compensate voltage information output from the voltage output unit (2) based on a preset compensation coefficient, and obtain voltage information output from the driving voltage switching module; and
wherein the preset compensation coefficient is 15 millivolts per degree Celsius (mV/°C), for every 1 degree Celsius (°C) increase in temperature, a voltage is decreased by 15 millivolts (mV), whereas for every 1°C decrease in the temperature, the voltage is increased by 15 mV.

5. The rapid switching system of the long-distance and short-distance measurement modes for the laser ranging telescope as claimed in claim 1, wherein the received signal detection module (9) comprises an eighth capacitor C8, a ninth capacitor C9, a tenth capacitor C10, a ninth resistor R9, a tenth resistor R10, an eleventh resistor R11, a twelfth resistor R12, and a second comparator chip U2;
wherein the tenth resistor R10 is connected to the ninth resistor R9, the ninth resistor R9 is connected to a second power supply, a node between the tenth resistor R10 and the ninth resistor R9 serves as a first reference voltage node connected to the second comparator chip U2 and the ninth capacitor C9, the eleventh resistor R11 is connected to the twelfth resistor R12, the twelfth resistor R12 is connected to the second power supply, the eighth capacitor C8 is connected to the eleventh resistor R11 in parallel, a node among the eleventh resistor R11, the eighth capacitor C8 and the twelfth resistor R12 serves as a second reference voltage node connected to the second comparator chip U2, and the tenth capacitor C10 is connected to the second power supply and the second comparator chip U2.

6. The rapid switching system of the long-distance and short-distance measurement modes for the laser ranging telescope as claimed in claim 2, wherein the boost unit (1) comprises a first power supply, a metal-oxide-semiconductor (MOS) transistor Q1, a first inductor L1, and a fourth capacitor C4; and
wherein an input terminal of the MOS transistor Q1 is connected to the output terminal of the boost chip unit (8), an output terminal of the MOS transistor Q1 is connected to the voltage output unit (2), the first inductor L1 is connected to the fourth capacitor C4; and the first inductor L1, the first power supply, and the fourth capacitor C4 are connected onto a circuit composed of the boost chip unit (8) and the MOS transistor Q1.

7. The rapid switching system of the long-distance and short-distance measurement modes for the laser ranging telescope as claimed in claim 2, wherein the DAC voltage regulation unit (7) comprises a second resistor R2;
wherein the voltage feedback unit (5) comprises a third resistor R3, a fourth resistor R4, and a second capacitor C2; and
wherein the third resistor R3 is connected to the fourth resistor R4 in series, and the second capacitor C2 is connected to the third resistor R3 in parallel.

8. The rapid switching system of the long-distance and short-distance measurement modes for the laser ranging telescope as claimed in claim 2, wherein the voltage output unit (2) is a rectifier filter circuit including a diode D1 and a fifth capacitor C5; and
wherein the high voltage detection unit (3) comprises a fifth resistor R5, a sixth resistor R6, and a sixth capacitor C6; the fifth resistor R5, the sixth resistor R6 and the sixth capacitor C6 are connected in a series-parallel configuration.

9. The rapid switching system of the long-distance and short-distance measurement modes for the laser ranging telescope as claimed in claim 6, wherein,
when the MOS transistor Q1 is turned on, the first inductor L1 short-circuits the first power supply, such that the first power supply charges the first inductor L1, an inductor current increases at a constant slope, and the first inductor L1 begins to store energy;
when the MOS transistor Q1 is turned off, the inductor current continues flowing in an original current direction, with the first inductor L1 resisting the inductor current from decreasing, thereby generating a reverse electromotive force.

10. A laser ranging telescope, comprising:
an optical component, configured to collect target light rays and magnify an image;
a laser generating component, configured to generate and emit laser pulses;
a rapid switching system of long-distance and short-distance measurement modes for the laser ranging telescope, configured to rapidly regulate a working voltage;
a data processing component, configured to process a received electric signal and calculate a measurement result; and
a user interface component, configured to display the measurement result and allow a user to set and control;
wherein the rapid switching system of long-distance and short-distance measurement modes for the laser ranging telescope is the rapid switching system of the long-distance and short-distance measurement modes for the laser ranging telescope as claimed in any one of claims 1-9.

11. A rapid switching system of long-distance and short-distance measurement modes for a laser ranging telescope, comprising: a received signal detection circuit, a driving voltage switching circuit, and an MCU-based circuit;
wherein the received signal detection circuit is configured to detect a received signal, an output terminal of the received signal detection circuit is electrically connected to the MCU-based circuit, and an input terminal of the driving voltage switching circuit is electrically connected to the MCU-based circuit;
wherein the MCU-based circuit is integrated with a DAC controller, and the DAC controller is configured to output a DAC voltage control signal to the input terminal of the driving voltage switching circuit;
wherein the MCU-based circuit is configured to output, in response to detecting a high-level signal sent by the received signal detection circuit, a high control voltage through the DAC controller, causing the driving voltage switching circuit to output a low voltage for switching the laser ranging telescope to the short-distance measurement mode;
wherein the MCU-based circuit is configured to output, in response to detecting a low-level signal sent by the received signal detection circuit, a low control voltage through the DAC controller, causing the driving voltage switching module to output a high voltage for switching the laser ranging telescope to the long-distance measurement mode; and
wherein the driving voltage switching circuit comprises a voltage detection circuit, a voltage output circuit, a boost circuit, a boost chip, a voltage feedback circuit, a DAC voltage regulation circuit, and a filter circuit; an input terminal of the filter circuit serves as the input terminal of the driving voltage switching circuit, an output terminal of the filter circuit is electrically connected to an input terminal of the DAC voltage regulation circuit, and an output terminal of the DAC voltage regulation circuit is electrically connected to an input terminal of the voltage feedback circuit; an output terminal of the voltage feedback circuit is electrically connected to an input terminal of the boost chip, and an output terminal of the boost chip is electrically connected to an input terminal of the boost circuit; an output terminal of the boost circuit is electrically connected to an input terminal of the voltage output circuit, and an output terminal of the voltage output circuit is connected to an input terminal of the voltage detection circuit; an output terminal of the voltage detection circuit is connected to the MCU-based circuit and another output terminal of the voltage detection circuit is configured to output the low voltage and the high volage.

12. The rapid switching system of the long-distance and short-distance measurement modes for the laser ranging telescope as claimed in claim 11, wherein the driving voltage switching circuit further comprises an environmental temperature detection circuit, and the environmental temperature detection circuit is electrically connected to the MCU-based circuit;
wherein the environmental temperature detection circuit comprises a thermistor NTC, a seventh resistor R7, an eighth resistor R8, a seventh capacitor C7, and a second power supply; and
wherein the thermistor NTC is connected to the eighth resistor R8, the eighth resistor R8 is connected to the second power supply, a node between the thermistor NTC and the eighth resistor R8 serves as an output terminal electrically connected to the seventh resistor R7 and the seventh capacitor C7, and the seventh capacitor C7 is connected to the MCU-based circuit.

13. The rapid switching system of the long-distance and short-distance measurement modes for the laser ranging telescope as claimed in claim 11, wherein the received signal detection circuit comprises an eighth capacitor C8, a ninth capacitor C9, a tenth capacitor C10, a ninth resistor R9, a tenth resistor R10, an eleventh resistor R11, a twelfth resistor R12, and a second comparator chip U2; and
wherein the tenth resistor R10 is connected to the ninth resistor R9, the ninth resistor R9 is connected to a second power supply, a node between the tenth resistor R10 and the ninth resistor R9 serves as a first reference voltage node connected to the second comparator chip U2 and the ninth capacitor C9, the eleventh resistor R11 is connected to the twelfth resistor R12, the twelfth resistor R12 is connected to the second power supply, the eighth capacitor C8 is connected to the eleventh resistor R11 in parallel, a node among the eleventh resistor R11, the eighth capacitor C8 and the twelfth resistor R12 serves as a second reference voltage node connected to the second comparator chip U2, and the tenth capacitor C10 is connected to the second power supply and the second comparator chip U2.

14. The rapid switching system of the long-distance and short-distance measurement modes for the laser ranging telescope as claimed in claim 11, wherein the boost circuit comprises a first power supply, a MOS transistor Q1, a first inductor L1, and a fourth capacitor C4; and
wherein an input terminal of the MOS transistor Q1 is connected to the output terminal of the boost chip circuit, an output terminal of the MOS transistor Q1 is connected to the voltage output circuit, the first inductor L1 is connected to the fourth capacitor C4; and the first inductor L1, the first power supply, and the fourth capacitor C4 are connected onto a circuit composed of the boost chip unit (8) and the MOS transistor Q1.

15. The rapid switching system of the long-distance and short-distance measurement modes for the laser ranging telescope as claimed in claim 11, wherein the DAC voltage regulation circuit comprises a second resistor R2;
wherein the voltage feedback circuit comprises a third resistor R3, a fourth resistor R4, and a second capacitor C2;
wherein the third resistor R3 is connected to the fourth resistor R4 in series, and the second capacitor C2 is connected to the third resistor R3 in parallel;
wherein the voltage output circuit is a rectifier filter circuit including a diode D1 and a fifth capacitor C5; and
wherein the voltage detection circuit comprises a fifth resistor R5, a sixth resistor R6, and a sixth capacitor C6; and the fifth resistor R5, the sixth resistor R6 and the sixth capacitor C6 are connected in a series-parallel configuration.
